# EUROPEAN PATENT APPLICATION

(11) **EP 4 733 491 A1**
(43) Date of publication of application: **29.04.2026**
(21) Application number: 25203751.0
(22) Date of filing: 22.09.2025
(51) Int. Cl.: E03B 7/04, E03B 1/04

(54) **FLUID HANDLING APPARATUS**

(30) Priority: 23.10.2024 GB 202415611
(71) Applicant: Kohler Mira Limited, Cheltenham, Gloucestershire GL52 5EP (GB)
(72) Inventor: HOBBS, Barry, Cheltenham, GL52 5EP (GB); LEA, Ben, Cheltenham, GL52 5EP (GB); BLENKARN, Daniel, Cheltenham, GL52 5EP (GB)
(74) Representative: Barker Brettell LLP

(57) **Abstract**

A fluid handling apparatus (100) for an ablutionary device (202). The fluid handling apparatus (100) comprising: a hot inlet (102) and a cold water inlet (104) configured to be connectable to a hot water supply and cold water supply respectively; a mixer valve (112) configured to receive water from the hot water inlet (102) and the cold water inlet (104) and output a blended stream of hot water, cold water or a mixture thereof; a controller (116) in communication with the mixer valve (112) and configured to control the mixer valve (112) according to a target output temperature set by a user; a temperature sensor (121; 122; 123) in communication with the controller (116) and configured to generate a temperature signal indicative of the temperature of water received at the hot water inlet (102); a primary outlet (106; 108) configured to be connectable to an outlet or outlets of the ablutionary device (202); a secondary outlet (110) for water redirection; and one or more flow control valves (113) in fluid communication with the mixer valve, the one or more flow control valves (113) configured to control water flow between the mixer valve and the primary and secondary outlets. The controller (116) is configured to control the one or more flow control valves (113), according to the target output temperature and the temperature signal, to operate in a first state in which the one or more flow control valves allow water to flow from the secondary outlet when water received at the hot water inlet is not at a temperature sufficient to meet the target output temperature, and to operate in a second state in which the one or more flow control valves allow water to flow from the primary outlet when water received at the hot water inlet is at a temperature sufficient to meet the target output temperature.

## Description

The present application relates to a fluid handling apparatus for an ablutionary device and a method of operating the fluid handling apparatus. The ablutionary device may be a shower and/or a faucet.

An ablutionary device such as a shower or faucet (i.e. a tap) may be fed a supply of hot and cold water. This may be done using a system of pipework running from a suitable source of hot and cold water to the location of the shower or tap. The source of hot water may be a hot water storage tank or an instantaneous water heater. These may be located a considerable distance from the shower or pipe and there may be lengthy sections of pipe work to connect them.

In a first aspect, the present application provides a fluid handling apparatus for an ablutionary device, comprising any one or more of the following features:
a hot water inlet and a cold water inlet configured to be connectable to a hot water supply and cold water supply respectively;
a mixer valve configured to receive water from the hot water inlet and the cold water inlet and output a blended stream of hot water, cold water or a mixture thereof;
a controller in communication with the mixer valve and configured to control the mixer valve according to a target output temperature set by a user;
a temperature sensor in communication with the controller and configured to generate a temperature signal indicative of the temperature of water received at the hot water inlet;
a primary outlet configured to be connectable to an outlet or outlets of the ablutionary device;
a secondary outlet for water redirection; and
one or more flow control valves in fluid communication with the mixer valve, the one or more flow control valves configured to control water flow between the mixer valve and the primary and secondary outlets,
wherein the controller is configured to control the one or more flow control valves, according to the target output temperature and the temperature signal, to operate in a first state in which the one or more flow control valves allow water to flow from the secondary outlet when water received at the hot water inlet is not at a temperature sufficient to meet the target output temperature, and to operate in a second state in which the one or more flow control valves allow water to flow from the primary outlet when water received at the hot water inlet is at a temperature sufficient to meet the target output temperature.

The fluid handling apparatus may therefore redirect water out of the secondary outlet when the temperature of water is not sufficient to meet the target temperature set by the user. This may allow a 'dead leg' of cold stationary water within the pipework supplying the ablutionary device to be redirected, rather than the user allowing it to flow down the drain before they start using the ablutionary device or it cause an uncomfortable cold burst of water. This may avoid the water of a 'dead leg' within the hot water supply pipes being wasted or avoid wasting water during a period in which an instantaneous water heater has not yet reached operating temperature.

In the first state, the one or more flow control valves may be operated to prevent (e.g. reduce to substantially zero) water from flowing from the primary outlet. In the first state, the one more flow control valves may be operated to allow water to flow from only the secondary outlet.

In the second state, the one or more flow control valves may be operated to prevent water from flowing from the secondary outlet. In the second state, the one more flow control valves may be operated to allow water to flow from only the primary outlet.

The one or more flow control valves may comprise a first flow control valve configured to control flow from the primary outlet and a second flow control valve configured to control flow from the secondary outlet.

Each of the first and second flow control valves may be a shut-off valve configured to switch between an off-state and an on-state.

The shut-off valves may be solenoid valves.

The secondary outlet may be configured to be connectable to a device external to the ablutionary device. The device external to the ablutionary device may be a water storage tank.

The water storage tank may be configured to provide water to a device other than the ablutionary device. This may allow the water to be reused for another purpose.

The water storage tank may be configured to provide water to the ablutionary device. This may allow the water to be reused by the ablutionary device. The water from the secondary outlet may be redirected to the cold water inlet of the fluid handling apparatus. As the redirected water may be hotter than the cold water supplied to the fluid handling apparatus this may reduce the amount of hot water needed.

The secondary outlet may be configured to be connectable directly to another device or to an inlet of the fluid handling apparatus for use of the water without intermediate storage.

The controller may be configured to operate the one or more flow control valves in the first state when the temperature of water received at the hot water inlet is less than the target output temperature. This indicates that the mixer valve will not be able to provide the desired output water temperature even when the hot water supply is not mixed with any cold water.

The controller may be configured to operate the one or more flow control valves in the first state when the inlet hot water temperature is greater than a threshold amount above the target output temperature. This may ensure that the mixer valve can produce the required water temperature by mixing both hot and cold water.

The controller may be configured to obtain a target output temperature for a specific user of the ablutionary device. The controller may obtain the target output temperature by receiving a user input defining the desired temperature.

The target output temperature may differ between users. This may allow the fluid handling apparatus to tailor the point at which it switches between the first and second operating states of the redirection valve to a specific user.

The controller may be configured to monitor (e.g. continuously monitor) the temperature signal indicative of the hot water inlet temperature in comparison to the target output temperature and operate the one or more flow control valves in the first or second state accordingly.

The temperature sensor(s) used to generate the temperature signal indicative of the temperature of water received at the hot water inlet may be electronic temperature sensors (rather than mechanical sensors). The temperature sensor(s) may be thermistors.

The controller may be configured to automatically switch the one or more flow control valves from the first state to the second state when the controller determines the water received at the hot water inlet is at a temperature sufficient to meet the target output temperature. This may allow the ablutionary device to automatically start once the desired hot water temperature can be achieved.

The controller may be configured to operate the fluid handling apparatus in a pause mode in which the inlet hot water is determined to be at a temperature sufficient to meet the target output temperature and the fluid handling apparatus is configured to pause/block fluid flow from the primary outlet. This may allow the water flow to be paused until the user is ready to use the ablutionary device.

The controller may be configured to operate the mixer valve, or the one or more flow control valves (or a separate shut-off device(s) provided within the fluid handling apparatus), to prevent water flowing from the primary outlet when operating in the pause mode.

The controller may be configured to de-active the pause mode such that water flows to the primary outlet in response to a user input. This may allow the user to start the ablutionary device when they are ready to use it.

The controller may be configured to generate a pause message for display at a display of the ablutionary device or display of another user device (e.g. a mobile device, such as a smart phone). The pause message may indicate the target output temperature can be met and the pause mode has been activated.

The controller may be configured to operate the one or more flow control valves in the first state when the fluid handling apparatus is operating in the pause mode such that water flows from the secondary outlet during operation in the pause mode. By allowing the water to continue to flow, the desired water temperature may be available straight away when the pause mode is deactivated. This may help to reduce risk of formation of another cold 'dead leg' in the pipework supplying the hot water inlet.

The controller may be configured to operate the fluid handling apparatus to block water flow from both the primary and secondary outlets when operating in the pause mode. This may reduce the amount of water used if the pause mode is used for a long time.

The controller may be configured to determine an amount of water which has flowed out of the secondary outlet during a period of use of the ablutionary device. The controller may be configured to send a determined value of the amount of water having flowed out of the secondary outlet for display at a display of the ablutionary device or at another user device (e.g. mobile device such as a smart phone).

According to a second aspect, there is provided an ablutionary device comprising the fluid handling apparatus of the first aspect. The ablutionary device may have one or more outlets (e.g. shower heads and/or faucet spouts). The primary outlet may be fluidly connected to the outlet or outlets of the ablutionary device.

The ablutionary device may be a shower and/or a faucet.

According to a third aspect, there is provided a plumbing system comprising the ablutionary device of the second aspect and a device external to the ablutionary device. The device external to the ablutionary device may be fluidly connected to the secondary outlet.

The device external to the ablutionary device may comprise a water storage tank.

The device external to the ablutionary device may be a toilet and the water storage tank may be a cistern of the toilet.

The water storage tank may be configured to supply water to the ablutionary device.

The water storage tank may be fluidly connected to the cold water inlet of the fluid handling device.

The water storage tank may be a hot water storage tank in which water is heated for supply to the ablutionary device, and may be fluidly coupled to the hot water inlet of the fluid handling apparatus.

According to a fourth aspect, there is provide a method of operating a fluid handling apparatus for an ablutionary device, the method comprising any one or more:
obtaining a target output temperature set by a user;
obtaining a temperature signal indicative of the temperature of hot water received by the fluid handling apparatus;
determining, based on the target output temperature and the temperature signal, whether the hot water received by the fluid handling apparatus is at a temperature sufficient to meet the target output temperature;
operating the fluid handling apparatus in a first mode in which water is allowed to flow from a secondary outlet for water redirection when the hot water received by the fluid handling apparatus is not at a temperature sufficient to meet the target output temperature; and
operating the fluid handling apparatus in a second mode in which water is allowed to flow from a primary outlet when the hot water received by the fluid handling apparatus is at a temperature sufficient to meet the target output temperature, the primary outlet connected to the ablutionary device.

The method of the fourth aspect may be a method of operating the fluid handling apparatus of the first aspect.

In the first mode the fluid handling apparatus may be operated such that water flows only from the secondary outlet and not from the primary outlet. In the first mode water may be prevented (e.g. flow reduce to substantially zero) from flowing from the primary outlet.

In the second mode the fluid handling apparatus may be operated such that water flows only from the primary outlet and not from the secondary outlet. In the second mode water may be prevented (e.g. flow reduce to substantially zero) from flowing from the secondary outlet.

The method may further comprise operating the fluid handling apparatus in a pause mode in which the hot water received by the fluid handling apparatus is determined to be at a temperature sufficient to meet the target output temperature and fluid flow from the primary outlet is blocked/paused.

The method may further comprise receiving a user input indicating that the user is ready to begin use of the ablutionary device. The method may further comprise de-activating the pause mode such that water flows to the primary outlet in response to the user input.

The method may further comprise generating an output message indicating the hot water received by the fluid handling apparatus is sufficient to meet the target output temperature and the pause mode has been activated. The method may further comprise sending the output message for display at a display of the ablutionary device or another user device.

Operating the fluid handling apparatus in the pause mode may comprise directing water to the secondary outlet.

Operating the fluid handling apparatus in the pause mode may comprise blocking water flow from both the primary and secondary outlet.

The method may further comprise determining an amount of water which has flowed out of the secondary outlet during a period of use of the ablutionary device. The method may further comprise sending a determined value of the amount of water flowed out of the secondary outlet for display at a display of the ablutionary device or another user device.

The skilled person will appreciate that except where mutually exclusive, a feature described in relation to any one of the above aspects may be applied to any other aspect.

Implementations of the invention will now be described, by way of example only, with reference to the accompanying drawings:
**Figure 1** shows a schematic view of an example fluid handling apparatus for an ablutionary device;
**Figure 2** shows a schematic view of another example fluid handling apparatus for an ablutionary device;
**Figure 3** shows a schematic view of an example plumping system which includes the fluid handling apparatus of Figure 1 or Figure 2, the ablutionary device and a device external to the ablutionary device;
**Figures 4 to 9** illustrate operational steps of the ablutionary device of Figure 3;
**Figure 10** illustrates a method of operating a fluid handling apparatus; and
**Figure 11** illustrates another method of operating a fluid handling apparatus.

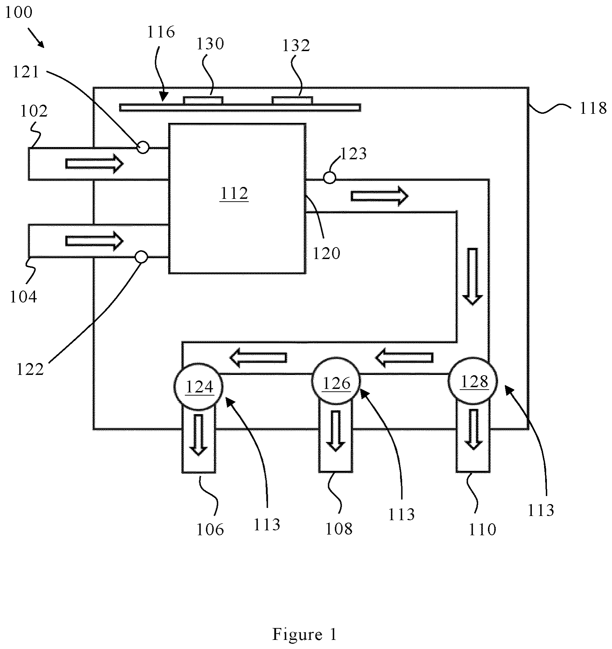

Figure 1 shows a schematic view of a fluid handling apparatus (or a fluid handling device) 100. The fluid handling apparatus is suitable for supplying water to the outlets of an ablutionary device such as a shower and/or a faucet (i.e. a tap).

The fluid handling apparatus 100 generally includes a hot water inlet 102, a cold water inlet 104, a first primary outlet 106, a second primary outlet 108, a secondary outlet 110, a mixer valve 112, flow control valves 113 and a controller 116. In the described example, the components of the water handling apparatus 100 are provided in a single housing 118. The fluid handling apparatus 100 may therefore form an electronic mixer valve unit (i.e. a digital mixer valve unit) for supplying water to a shower or faucet. The components of the water handling apparatus may however be distributed across several different units. The fluid handling apparatus 100 may be separate from the ablutionary device, or may form part of it.

The fluid handling apparatus 100 includes a hot water inlet 102 and a cold water inlet 104 configured to receive a supply of hot and cold water respectively. The hot and cold water inlets 102, 104 are configured to be connectable to a hot water supply and cold water supply of a plumbing system. The hot water may be supplied from a suitable hot water storage tank or instantaneous water heater. The cold water may be a supply of ambient temperature mains water.

The fluid handling apparatus 100 has three water outlets - the first and second primary outlets 106, 108 are configured to output a water supply for the ablutionary device and the secondary outlet 110 is configured for water redirection (e.g. water repurposing or reuse). The first and second primary outlets 106, 108 are therefore configured to be connectable to the ablutionary device. The first and second outlets 106, 108 may be fluidly connected to separate outlets of the ablutionary device. The secondary outlet 110 may be configured to be connectable to a device external to the ablutionary device. In some examples therefore, the water flowing through the secondary outlet 110 (i.e. redirected water) may be used by a device that is different from the ablutionary device. In other examples, the directed water may be reused by the ablutionary device itself. The device external to the ablutionary device may be a water storage tank configured to store water so that it can be reused or repurposed (e.g. at a later time). The water storage tank may be fluidly connected to another device that can make use of the redirected water. In some examples, the water storage tank may be the cistern of a toilet. In other examples, the water storage tank may be a water butt (e.g. used to collect water for use in a garden or the like). In some examples, the water storage tank may be fluidly connected to the cold water inlet 104 of the fluid handling apparatus 100. This may allow the water to be reused by the ablutionary device. In other examples, the water storage tank may be fluidly connected to a water heater used to provide hot water to the hot water inlet 102 so that it can be reused by the ablutionary device. The water storage tank may form part of a water heater used to supply hot water to the ablutionary device. In yet other examples, the secondary outlet may be connectable to another device or to the fluid handling apparatus for reuse of the water without intermediate storage.

The hot water inlet 102 and cold water inlet 104 are each in fluid communication with the mixer valve 112. The mixer valve 112 is configured to receive water from the hot and cold water inlets 102, 104 and output a blended stream of hot water, cold water or a mixture thereof at an mixer valve outlet 120. The mixer valve 112 may be an electronically controlled mixer valve having one or more flow controllers (valves) configured to control the amount of hot and cold water that flows from the hot/cold inlets 102, 104 to the mixer valve outlet 120. Any suitable type of mixer valve may however be used.

The mixer valve 112 is in operative communication with the controller 116, which is configured to control the mixer valve 112 to provide the desired water temperature and flowrate for supply to the ablutionary device. To control the output water temperature, the fluid handling apparatus 100 includes a first, second and third temperature sensor 121, 122, 123. The first and second temperature sensors 121, 122 are configured to measure the temperature of water flowing through the hot and cold water inlets 102, 104 respectively. The third temperature sensor 123 is configured to measure the temperature of water flowing out of the mixer valve outlet 120. The controller 116 is configured to adjust the flow of hot and cold water through the mixer valve 112 such that the blended water stream produced at the mixer valve outlet 120 reaches a target output water temperature set by the user. In some embodiments, the controller 116 is configured to adjust the flow of hot and cold water through the mixer valve 112 based on the first and second temperature sensors 121, 122 (e.g. without needing the third temperature sensor 123). In other embodiments, any combination of one or more of the first, second or third temperature sensors may be provided to allow control of the mixer valve 112 to meet the desired temperate set by the user and to monitor the inlet water temperature as described below.

The number and position of the temperature sensors shown in Figure 1 is an example only. More generally, the fluid handling apparatus 100 includes one or more temperature sensors in communication with the controller 116 which are configured to generate a temperature signal indicative of (i.e. directly or indirectly related to) the temperature of water received at the hot water inlet 102. The temperature signal may be the temperature of water flowing through the hot water inlet 102 (e.g. measured directly by the first temperature sensor 121). The temperature signal may however be indirectly related to the temperature of water flowing through the hot water inlet 102. For example, the temperature signal may be the temperature of water flowing through the mixer valve outlet 120 (e.g. measured by the third temperature sensor 123), which may be proportional to the temperature of hot water supplied to the fluid handing apparatus 100. In other examples, the temperature signal indicative of the temperature of water received at the hot water inlet may be derived or inferred from the temperature of water measured by the second and/or third temperature sensors 122, 123. The temperature sensor(s) used to generate the temperature signal indicative of the temperature of water received at the hot water inlet 102 may be electronic temperature sensors such as thermistors or the like.

The mixer valve outlet 120 is fluidly connected to three flow control valves 113. The flow control valves 113 are configured to control water flow between the mixer valve 112 and the primary and secondary outlets 106, 108, 110. The flow from the mixer valve outlet 120 is therefore divided downstream of the mixer valve 120 into three separate channels to supply each of the primary and secondary outlets 106, 108, 110. One of the flow control valves 113 is provided in each channel. In some embodiments, a flow divider or manifold may be provided between the mixer valve 120 and the control valves 113 to divide the flow from the mixer valve 112.

The flow control valves 113 include a first flow control valve 124 configured to control flow from the first primary outlet 106, a second flow control valve 126 configured to control flow from the second primary outlet 108 and a third flow control valve 128 configured to control flow from the secondary outlet 110. Each of the flow control valves 113 may be a shut-off valve configured to switch between an off-state and an on-state. The shut-off valves may be solenoid valves in some examples. In other examples any other type of valve may be provided to control the flow rate.

The first and second flow control valves 124, 126 may additionally be operated by the controller according to a user input to select the desired outlet of the ablutionary device (e.g. to select between a wall mounted outlet and an overhead outlet as will be described later).

The flow control valves 113 are electronically controlled and may be in operative communication with the controller 116. The controller 116 may be configured to control the flow control valves 113 according to the target output temperature set by the user (which may be different for different users) and the temperature signal indicative of the hot water inlet temperature.

The fluid handling apparatus of the present application makes use of temperature sensors provided for control of the mixer valve 112 to also determine if the hot water received at the hot water inlet is sufficient to meet the desired output temperature set by the user. For example, any suitable combination of one or more of the first, second or third temperature sensors 121, 122, 123 may be used for both control of the mixer valve 112 and control of the flow control valves 113. For example, the first and second temperature sensors 121, 122 may be used for both purposes. This means that the control of the flow control valves 113 can be based on temperature sensors already provided in the fluid handling apparatus, without the need for additional dedicated sensors.

The controller 116 may be configured to determine whether the water received by the fluid handling apparatus 100 (e.g. at the hot water inlet 106) is at a temperature sufficient to meet the target output temperature. The controller 116 may determine if the temperature of the hot water received at the hot water inlet (based on the temperature signal indicative of the hot water inlet temperature) is less than the target output temperature. If that is the case, the mixer valve will not be able produce water at the required temperature even if it is not mixed with any cold water. In other examples, the controller 116 may only determine that the required target output temperature can be achieved if the inlet hot water temperature is greater than a threshold amount above the target output temperature. This may allow the mixer valve 112 to produce the required water temperature by mixing both hot and cold water.

The controller 116 is configured to control the flow control valves 113 to operate in a first state in which the flow control valves 113 allow water to flow from the secondary outlet 110 when it has determined that water received at the hot water inlet 102 is not at a temperature sufficient to meet the target output temperature. In the first state the flow may optionally be out of only the secondary outlet 110. In the first state therefore the first and second flow control valves 124, 126 may be closed (e.g. off) so that no water (or substantially no water) flows through them and the third flow control valve 128 may be open (e.g. on).

The controller 116 is further configured to control the flow control valves 113 to operate in a second state in which the flow control valves 113 allow water to flow from the primary outlets 106, 108 when it has determined that the water received at the hot water inlet is at a temperature sufficient to meet the target output temperature. In the second state there may be no flow (or substantially no flow) from the secondary outlet 110. In the second state at least one of the first and second flow control valves 124, 126 may be open (e.g. on) depending on which outlet the user has selected and the third flow control valve 128 may be closed (e.g. off). The controller 116 may be configured to monitor (e.g. continuously monitor) the temperature signal indicative of the hot water inlet temperature in comparison to the target output temperature and operate the flow control valves 113 in the first or second state accordingly.

The flow control valves 113 may be configured to redirect water to the secondary outlet 110 if the target water temperature cannot be achieved. This may allow the water to be reused rather than being allowed to flow from the ablutionary device and away to a drain. This avoids wasting a 'dead-leg' of cold water within the pipework supplying water to the hot water inlet 102, which would otherwise be directed through the outlet(s) of the ablutionary device while the user waits for the water to heat up. It also avoids wasting water where the hot water is supplied from an instantaneous water heater which takes time to reach its steady state operating temperature. Water that would otherwise be allowed to flow out of the ablutionary device while the user waits for the instantaneous water heater to sufficiently heat the water can be redirected rather than being wasted.

The operation of the flow control valves 113 may be tailored to the specific temperature required by the user (provided by user input to the controller and which can be different for each user). Smart switching may therefore be provided in that the fluid handling apparatus 100 may know what temperature the user has asked for and the switching point between the first and second state of operation can be different depending on user request. This may allow the switching point to change, rather than being at a fixed temperature if the redirection valve were controlled by a mechanical temperature sensor (e.g. in which the flow of water is adjusted by expansion or contraction of part of the temperature sensor). Such a mechanical temperature sensor may only allow water to be redirected below a fixed or preset temperature rather than a temperature than can be set or adjusted by the user.

The controller 116 may be configured to automatically switch the flow control valves 113 from operating in the first state to the second state when the controller 116 determines that the temperature of water received at the hot water inlet 106 is sufficient to meet the desired target output temperature. When use of the ablutionary device begins, the water temperature may be insufficient to provide the target temperature set by the user. The controller 116 may therefore operate the flow control valves 113 in the first state to avoid water being wasted. Once the target temperature can be achieved, the controller 116 may automatically switch to operating the flow control valves 113 in the second state such that water automatically starts flowing from the outlet(s) of the ablutionary device and is ready for use.

In some examples, the controller 116 may be configured to operate the fluid handling apparatus 100 in a pause mode. In the pause mode the controller 116 has determined that the temperature of the water received at the hot water inlet 102 is sufficient to meet the target output temperature but water flow from the primary outlets 106, 108 is paused or blocked. The controller 116 may be configured to de-active the pause mode such that water flows to the primary outlets 106, 108 in response to a user input. This may allow the water flow from the ablutionary device to be paused until the user is ready to use it.

In some examples, the controller 116 may be configured to generate a pause message for display at a display of the ablutionary device or other connected user device. The pause message may indicate the pause mode has been activated. The user may therefore be informed that the ablutionary device is now able to produce the desired water temperature and so is ready for them to use. The user may then provide a user input to turn off the pause mode when ready.

When operating in the pause mode, the controller 116 may be configured to block water flow from the primary outlets 106, 108 using any suitable fluid flow control device available within the fluid handling apparatus 100. For example, the controller 116 may operate the mixer valve 112 to block both the flow of hot and cold water when operating in the pause mode. Additionally, or alternatively, the controller may operate another valve or valves within the fluid handling apparatus 100, such as the flow control valves 124, 126, to block water flow from the primary outlets 106, 108 when operating in the pause mode.

The controller 116 may be configured to operate the flow control valves 113 in the first state when the fluid handling apparatus 100 is operating in the pause mode. This may allow water to flow from the secondary outlet 110 during operation in the pause mode. By allowing water to continue to flow, cooling of water within the supply pipes may be prevented and a further cold deal leg avoided. If the hot water supply is from an instantaneous water heater, allowing the water to flow may allow the supply of hot water inlet water to remain at the desired temperature. By keeping the hot water flowing, the fluid handling apparatus 100 may allow the target output temperature to be achieved straightaway once the user deactivates the pause mode.

In some examples, the controller 116 may be configured to operate the fluid handling apparatus 100 to block water flow from both the primary and secondary outlets 106, 108, 110 when operating in the pause mode. This may be done by the controller 116 operating the mixer valve 112 or other flow control device(s) (e.g. flow control valves 113) within the fluid handling apparatus 100 to stop the flow of water.

The fluid handling apparatus 100 may be configured to provide user feedback on how much water has been saved by redirecting it to the secondary outlet 110. In some examples, the controller 116 may be configured to determine how much water (i.e. the volume of water) that has flowed out of the secondary outlet 110 during a period of use of the ablutionary device. The controller 116 may be further configured to send a determined value of the amount of water to a display of the ablutionary device or to a user device (e.g. mobile device such as a smart phone) to inform the user how much water has been saved. The period of use may correspond to a single use of the ablutionary device (e.g. the period of use that has just ended) or to a period in which several uses have occurred. This may allow the user to see how much water they have saved each time the ablutionary device has been used or over a period of weeks, months or years of use. The controller 116 may be configured to send the determined amount of water saved for a single use for display once the ablutionary device has been turned off so that the user can see a how much water was saved.

The controller 116 may comprise one or more processors 130 and a memory 132 arranged to store computer readable instructions that may be carried out by the processor(s) 130 to perform any of the functions of the controller 116 described herein. The controller 116 may further comprise a wireless communication module (not shown in the figures) in the form of a Bluetooth module and/or a WiFi module arranged to allow wireless communication between the controller 116 and remotely located parts of the fluid handling apparatus or ablutionary device. The wireless communication module may be further arranged to provide communication over the internet via a wireless local area network (Wi-Fi network), cellular network or any other suitable wireless network. The WiFi module may be a separate module connected to a main PCBA of the controller 116. The controller 116 may further comprises a wired connection point to which wired connections to other components of the fluid handling apparatus 100 or ablutionary device may be made.

The processor(s) 130 and memory 132 may form a microcontroller (MCU) configured to carry out any of the functions of the controller 116 described herein. In other examples, the controller may take different forms. The controller 116 may comprise any combination of hardware and software that operates to control and process information and carry out programmed instructions. The controller 116 may comprise any suitable processing circuitry including microprocessors, programmable logic devices, application specific integrated circuits (ASIC), application specific instruction set processors (ASIP) or the like. The controller 116 may be any device suitable for controlling the operations of the fluid handling apparatus 100 and optionally the ablutionary device according to the functions defined herein (or additional functions) by processing information (e.g. information received from sensors, stored in local memory or received from an external source and outputting instructions to components of the fluid handling apparatus 100 (e.g. the mixer valve and shut-off valves accordingly)). In some examples, the controller 116 may be formed from distributed components, some or all of which may be located outside of the housing 118. For example, the controller 116 may be located remotely from the housing 118, and may have a suitable wired or wireless connection with the components within the housing.

In some examples, a single controller 116 may be provided to control a single fluid handling apparatus 100 in which a single mixer valve is included to provide blended water to water outlets of any number of ablutionary devices. In other examples, the controller 116 may be arranged to control multiple fluid handling apparatus, for example each having a separate mixer valve and receiving separate hot and cold water supplies. For example, the controller 116 shown in Figure 1 may control another fluid handling apparatus 100 that is similar to that shown in Figure 1, but without needing a second controller.

Other arrangements of control valves 113 may be provided to control flow from the primary and secondary outlets 106, 108, 110. More generally therefore, the fluid handling apparatus 100 may include one or more flow control valves configured to control flow from the primary and secondary outlets and which are configured to operate in a first state in which water is allowed to flow from (optionally only) the secondary outlet and a second state in which water is allowed to flow from the primary outlet or outlets. More generally therefore, the one or more flow control valves are in fluid communication with the mixer valve, the one or more flow control valves being configured to control water flow between the mixer valve and the primary and secondary outlets.

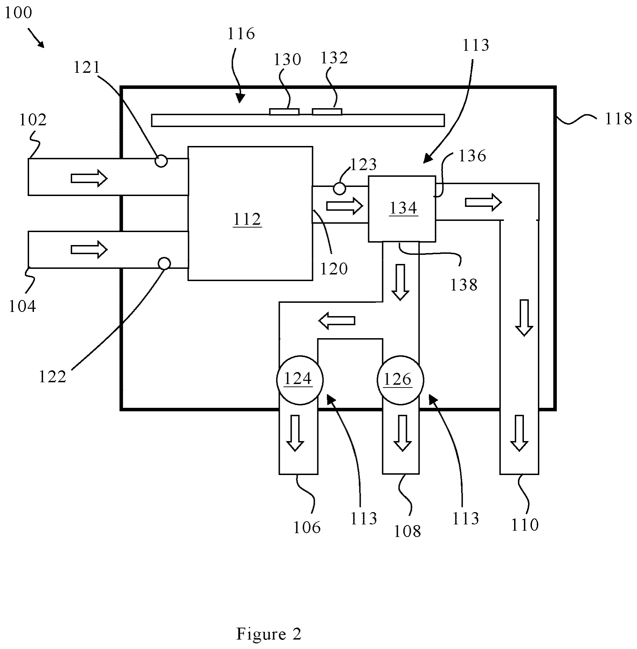

An alternative arrangement of flow control valve is illustrated in Figure 2. In this example, the one or more control valves 113 include a redirection valve 134 which may be configured to direct the flow of water it receives from the mixer valve 112 to a first or second outlet 136, 138. In some examples, the redirection valve 113 may be a diverter valve which is arranged to divide the flow of water between its first and second outlets 136, 138 (i.e. the rate of flow of water from its first outlet 136 may be inversely proportional to the rate of flow out of its second outlet 138). In other examples, the redirection valve 134 may be configured to control the flow of water from its outlets 136, 138 independently i.e. it may be able to operate in a state in which there is no flow out of either of its outlets 136, 138.

The first outlet 136 of the redirection valve 134 may be fluidly connected to the secondary outlet 110. The second outlet 138 of the redirection valve 134 may be fluidly connected to the first and second primary outlets 106, 108. The first and second primary outlets 106, 108 may be arranged in parallel such that fluid flow from the redirection valve 134 is divided (e.g. equally) between them. This may be done by a suitable flow divider or manifold. Other arrangements may be provided. The fluid handling apparatus 100 further includes first and second shut-off valves 124, 126 arranged to control the flow out of each of the first and second primary outlets 106, 108 respectively. The shut-off valves may allow independent control of the fluid flow out of each of the primary outlets 106, 108. The shut-off valves may each include a solenoid valve or other suitable (electronically) controlled valve. The shut-off valves may be in operative communication with the controller 116 and may allow the user to select which outlet of the ablutionary device water should flow from.

The redirection valve 134 may be operated in a first state corresponding to the first state of the flow control valves 113 described above and shown in Figure 1. In the first state water is directed to the first outlet 136 of the redirection valve 134 and allowed to flow from the secondary outlet 110. The redirection valve 134 may be operated in a second state corresponding to the second state of the flow control valves 113 described above and shown in Figure 1. In the second state water is directed to the second outlet 138 of the redirection valve 134 and one or both of the shut-off valves 124, 126 opened to allowed water to flow from the one or both of the primary outlets 106, 108.

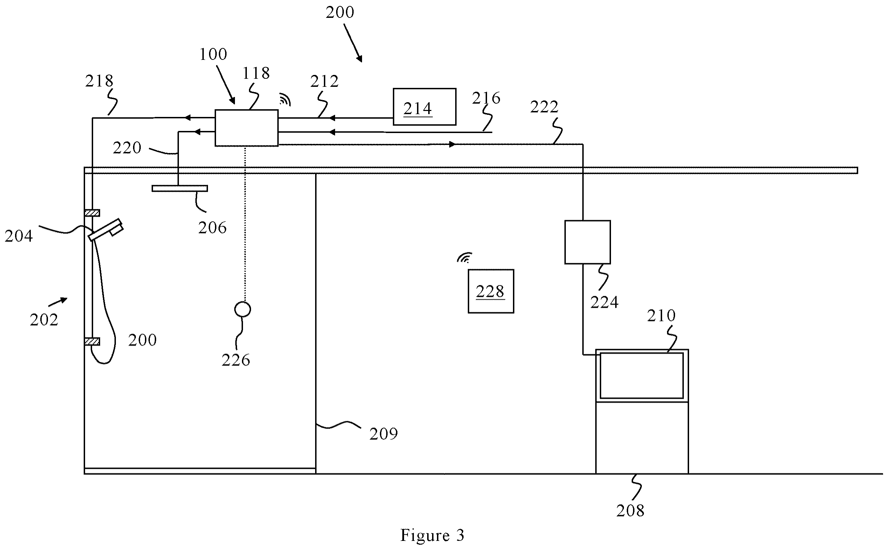

Figure 3 illustrates a plumbing system 200 which includes an ablutionary device 202, the ablutionary device including the fluid handling apparatus 100 shown in Figure 1 or Figure 2 (or as described or claimed anywhere herein). In this example, the ablutionary device 202 is a shower having two water outlets - a wall mounted outlet 204 and an overhead outlet 206. The shower is mounted in a shower enclosure 209.

The plumbing system 200 includes a device 208 external to the ablutionary device 202. This may be as defined above. In this example, the device 208 external to the ablutionary device is a toilet having a cistern 210 configured to store water for use in flushing the toilet. In other examples, the device external to the ablutionary device may be any other device that is external to the ablutionary device. For example, it may be a water storage butt storing water for other use. In some examples, the device external to the ablutionary device may be a water storage tank configured to store water that can be directed back to the fluid handling apparatus 100. In such an example, an outlet of the water storage tank may be fluidly connected to the cold water inlet 104 of the fluid handling apparatus 100.

The plumbing system 200 may include a hot water conduit 212 (e.g. pipe) fluidly connected to the hot water inlet 102 of the fluid handling apparatus 100. The hot water conduit 212 is configured to provide a supply of hot water from a hot water storage tank 214 (or instantaneous water heater). The plumbing system 200 may further include a cold water conduit 216 fluidly connected to the cold water inlet 104 of the fluid handling apparatus 100. The cold water conduit 216 is configured to provide a supply of cold water, e.g. from a mains water supply.

The plumbing system 200 may further include a first output conduit 218 configured to fluidly connect the first primary outlet 106 to the wall mounted outlet 204 of the ablutionary device 202. The plumbing system 200 may further include a second output conduit 220 configured to fluidly connect the second primary outlet 108 to the overhead outlet 206.

The plumbing system 200 may include a conduit 222 (e.g. a redirection conduit) configured to fluidly connect the secondary outlet 110 of the fluid handling apparatus 100 to the device 208 external to ablutionary device 202. The plumbing system 200 may include a pump 224 configured to pump water from the secondary outlet 110 to the device 208 external to the ablutionary device. In some examples, the pump 224 may not be required, with water flowing by gravity. The arrangement shown in Figure 3 is only one example and the redirected water can be used for other purposes as described elsewhere herein.

The ablutionary device 202 may include a user interface 226. The user interface 226 may be a wall mounted device provided inside the shower enclosure 209. The user interface is in operable communication with the controller 116 of the fluid handling apparatus 100. The user interface 226 may be configured to display information to the user and receive user input. The user interface 226 may include a touchscreen (i.e. a touch sensitive display). In other examples, any suitable user interface may be used. The user interface may, for example, include a separate display screen and input device (e.g. buttons). The controller 116 may have a wired connection with the user interface 226. In some examples a wireless connection may be provided.

As discussed above, the controller 116 of the fluid handling apparatus may additionally or alternatively be in communication with a separate user device 228. The separate user device may be a mobile device such as a smart phone or tablet or the like. A wireless connection (e.g. a WiFi connection over a LAN or over the public internet) may be provided to allow communication between the controller 116 and the user device 228.

Although the examples shown in Figures 1, 2 and 3 include two primary outlets 106, 108 that may not be the case in all examples. One of the primary outlets 106, 108 (and optionally also flow control valves 124, 126) may be omitted so that an ablutionary device with a single water outlet (e.g. a single shower head) can be supplied with water. In other examples, further primary outlets (and optionally further respective flow control valves 113) may be provided. In some examples, one or more of the primary outlets may be blanked-off during installation if they are not required. In some examples, the primary outlets may be used to supply water to a mixture of shower spray heads and faucet spouts. For example, the first primary outlet may supply a faucet spout and the second may supply a shower spray head.

The controller 116 may be arranged to control operation of the various components of the fluid handling apparatus 100 and optionally of the ablutionary device 202 being supplied with water. The controller 116 is in operative communication with the components of the fluid handling apparatus 100 shown in Figure 1 or 2 and any external components (which may be part of the ablutionary device) by suitable wired or wireless connections.

Although the fluid handling apparatus 100 is shown located separately from the other components of the ablutionary device in Figure 3 that may not be the case. The fluid handling apparatus 100 may form part of the ablutionary device 100 in a single unit. In other examples, they may be separate devices.

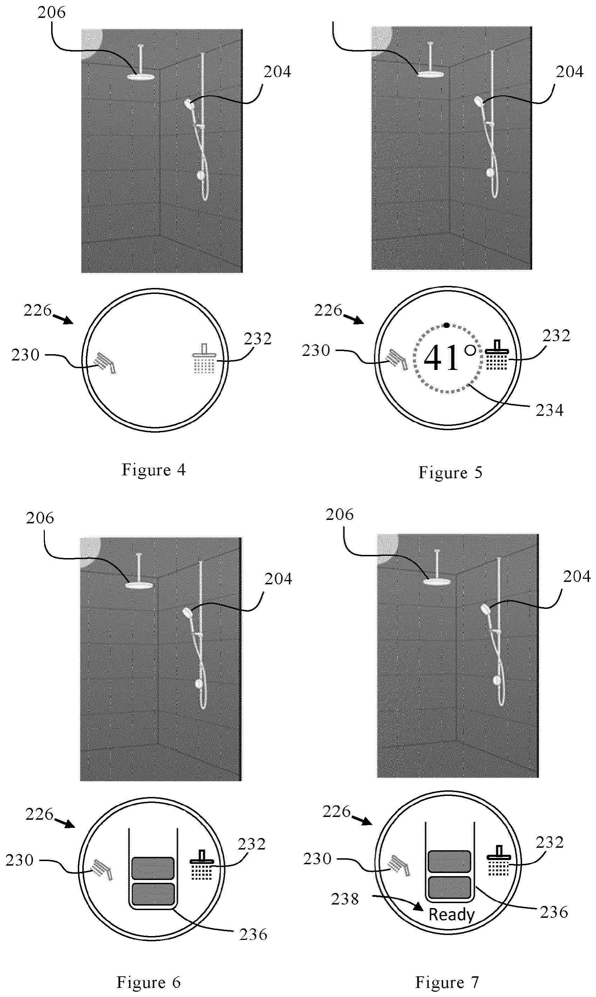

Figures 4 to 9 illustrate the use of the ablutionary device 202. The top part of each of Figures 4 to 9 shows the wall mounted and overhead outlets 204, 206 of the ablutionary device 202. The bottom part of each Figure shows the touch screen of the user interface 226.

In Figure 4, the ablutionary device 202 is switched off and no water is flowing from either outlet 204, 206. In Figure 5, a user input is received to select a desired water outlet and temperature. The user interface is configured to display a first graphical symbol 230 representing the wall mounted outlet 204 and a second graphical symbol 232 representing the overhead outlet 206 and is configured to detect a touch input at a respective symbol to input a selection by the user. In the example shown in Figure 5, the user has selected the overhead outlet 206, which is then illuminated/highlighted on the user interface 226. The user interface 226 is further configured to display a temperature control graphic 234 via which the user may select a desired target output temperature using a touch gesture. The user interface 226 may be configured to display the temperature set point, which is 41 degrees in the example shown in Figure 5.

Once an outlet and temperature have been selected the controller 116 may be configured to operate the mixer valve 112 to allow water to flow through the fluid handling apparatus 100. This may be done automatically or in response to a further user input to activate the water flow.

The controller 116 is configured to determine if the water being received at the hot and cold water inlets 102, 104 is sufficient to provide the desired output temperature as described above. In the present example, the controller 116 has determined that the hot water inlet temperature is not sufficient (e.g. because of a 'dead leg' of cold water in the hot water conduit 212) and so the flow control valves 113 are operated to direct water out of the secondary outlet 110. The controller 116 may be configured to display a water redirection graphic 236 on the user interface 226 to indicate to the user that water is being redirected rather than is flowing out of the outlets of the ablutionary device.

The controller 116 may be configured to monitor the temperature of the water being received by the fluid handling apparatus 100 and determine when the water temperature is sufficient to provide outlet water at the desired temperature set by the user. In the present example, in response to determining that the water temperature is sufficient, the controller 116 is configured to activate the pause mode described above. When the pause mode is activated, the controller 116 is configured to display a "Ready" indicator 238 to indicate to the user the ablutionary device 202 is ready to use. The controller 116 may be configured to receive a user input to deactivate the pause mode e.g. using a suitable touch gesture provided at the user interface 226 (e.g. pressing on the word "Ready").

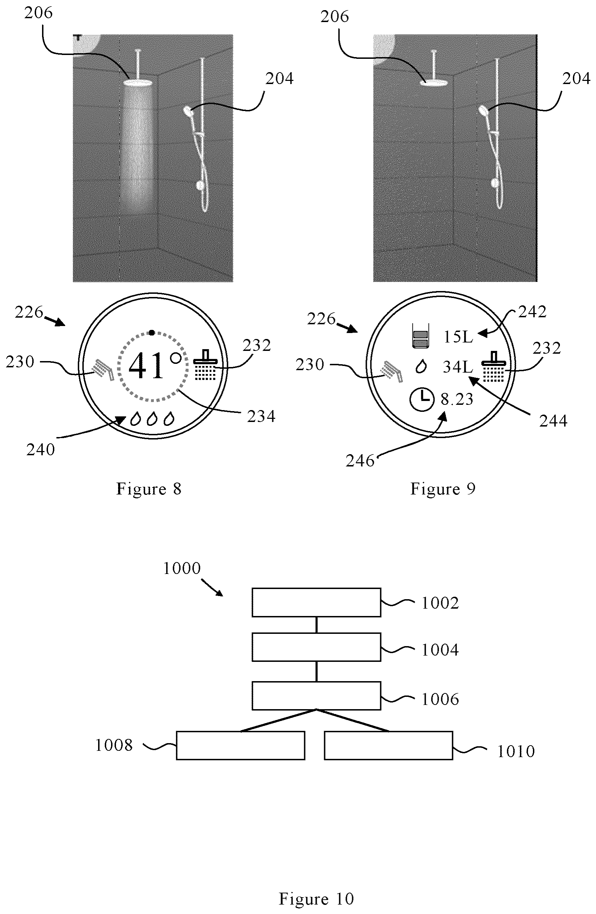

In response to deactivation of the pause mode by the user, the controller 116 is configured to operate the fluid handling apparatus 100 such that water flows out of the primary outlet corresponding to the outlet selected by the user. In the present example, the controller 116 is configured to operate the flow control valves 113 such that water flows out of the second primary outlet 108. Water is thus supplied to the overhead outlet 206 as shown in Figure 8. The controller 116 may be configured to display a "water flowing" indicator 240 as shown in Figure 8 once the pause mode has been deactivated and the flow of water from the outlet has started. The controller 116 may display the temperature control 234 rather than the water redirection graphic 234 such that the user may adjust the temperature during use. The controller 116 may continue to monitor the temperature of water provided to the fluid handling apparatus 100 and re-active the pause mode if the desired temperature can no longer be provided.

At the end of a period of use, the ablutionary device may be turned off using a suitable user input at the user interface 226. Once the period of use has ended, the controller 116 may be configured to display a use summary as shown in Figure 9. The use summary may provide information about the period of use that has just ended, or over a combination of several periods of use. The use summary may include an amount of water redirected indicator 242 configure to display the amount of water which has flowed from the secondary outlet of the fluid handling apparatus 100 (and hence the water saved). The use summary may further include a total water usage indicator 244 configured to show the amount of water used during that period of use (e.g. the amount of water that has flowed out of the ablutionary device outlets) and a use duration indicator 246 configure to show the duration of the period of use.

Figures 4 to 9 should be understood to show an example of the user input that can be received and information that can be shown by the user interface 226. In other examples, different graphical symbols, user inputs, information display and order of operation may be provided. In yet other examples, a different type of user interface may be provided (e.g. a display and/or separate buttons rather than a touch screen).

Figure 10 illustrates a method 1000 of operating the fluid handling apparatus 100. The method 1000 includes steps carried out by the controller 116 to control the flow of water through the fluid handling apparatus 100.

The method 1000 includes obtaining 1002 a target output temperature set by a user. The target output temperature may be obtained by receiving a suitable user input as described above. In other examples, the target output temperature may be obtained in any suitable way.

The method 1000 further includes obtaining 1004 a temperature signal indicative of the temperature of hot water received by the fluid handling apparatus. Obtaining 1004 the temperature signal may include receiving a temperature signal from the first temperature sensor 121 as described above. In other examples, a more indirect indication of the hot water temperature may be obtained. For example, a temperature signal from the third sensor 123 may be received and used to indicate the temperature of water received at the hot water inlet 102.

The method 1000 further includes determining 1006 whether the water received by the fluid handling apparatus (e.g. the water received at the hot water inlet) is at a temperature sufficient to meet the target output temperature. The determination made at step 1006 may be made based on the target output temperature and the temperature signal obtained in steps 1002 and 1004 respectively. Determining 1006 whether the water received is at a temperature sufficient to meet the target output temperature may include comparing the target output temperature to the temperature signal. If the temperature signal is less than the target out output temperature the determination may be negative - i.e. the water temperature is not sufficient. If the temperature signal is greater than or equal to the target output temperature the determination may be positive - i.e. the water temperature is sufficient. This comparison may be carried out where the temperature signal corresponds to the temperature of water flowing through the hot water inlet 102 (e.g. measured by the first temperature sensor 121). In other examples, the determination may be positive only if the temperature signal is greater than or equal to threshold amount above the target output temperature.

The method 1000 further includes operating 1008 the fluid handling apparatus in a first mode in which water is allowed to flow from (i.e. directed to) a secondary outlet when water received is determined in step 1006 to be below a temperature required to meet the target output temperature. In the first mode the flow control valves 113 are operated in the first state as descried above.

The method 1000 further includes operating 1010 the fluid handling apparatus 100 in a second mode in which water is allowed to flow from (i.e. directed to) the primary outlet(s) when the water received is determined in step 1006 to be at a temperature sufficient to meet the target output temperature. In the second mode the flow control valves 113 are operated in the second state as described above.

The step of determining 1006 whether the water received is at a temperature sufficient to meet the target output temperature may include monitoring (e.g. continuously) the temperature signal indicative of the hot water received by the fluid handling apparatus 100 and the target output temperature. Method steps 1008 or 1010 may be performed in response to that monitoring. In some examples, step 1008 may be carried out before step 1010 to redirect a dead-leg of cold water. In some examples, step 1008 may additionally or alternatively be performed after step 1010 (e.g. if the temperature of water supplied to the fluid handling apparatus 100 falls below that required to achieve the target output temperature).

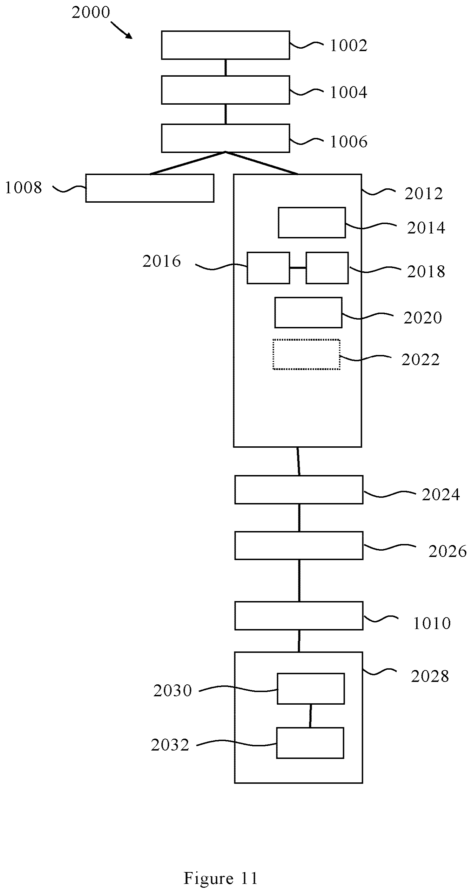

Figure 11 illustrates an example of a method 2000 which includes a pause mode. In this example, the method 2000 includes steps 1002, 1004, 1006, 1008 and 1010 corresponding to those described above. The method 2000 includes a step of operating 2012 the fluid handling apparatus 100 in a pause mode. In the pause mode, the water received by the fluid handling apparatus is determined to be at a temperature sufficient to meet the target output temperature and the method 2000 includes blocking/pausing 2014 the fluid flow from the primary outlet(s).

The step of operating 2012 in the pause mode may include generating 2016 a pause message indicating the water received is sufficient to meet the target output temperature and the pause mode has been activated. This method 2000 may include sending 2018 the output message for displayed on a display of the ablutionary device (e.g. user interface 226) or to a separate user device (e.g. smart phone).

Operating 2012 the fluid handling apparatus 100 in the pause mode may include directing 2020 water to the secondary outlet 110 such that water flows from the secondary outlet as described above. Additionally, or alternatively, operating 2012 the fluid handling apparatus 100 in the pause mode may include blocking 2022 water flow from both the primary and secondary outlet.

The method 2000 may further include receiving 2024 a user input indicating that the user is ready to begin use of the ablutionary device 202. In response to receiving the user input, the method 2000 includes a step of de-activating 2026 the pause mode such that water flows to the primary outlet in response to the user input. Once the pause mode is deactivated, the fluid handling apparatus 100 is operated in the second mode (e.g. step 1010) such that water is directed to the outlet(s) of the ablutionary device 202.

The method 2000 may further include providing/generating 2028 feedback on use of the ablutionary device 202. Providing 2028 feedback may include determining 2030 an amount of water which has flowed out of the secondary outlet during a period of use of the ablutionary device 202 and sending 2032 a determined value of the amount of water flowed out of the secondary outlet for display at a display of the ablutionary device or at user device (e.g. at the user interface 226 or the user device 228). Providing 2028 feedback on the use of the ablutionary device may additionally or alternatively include determining and displaying other information. This may include, for example, the duration of the respective period of use and amount of water directed through the ablutionary device outlet (e.g. as shown in Figure 9).

Any of the features described in connection with Figure 11 may also be used in the example of Figure 10. The order of steps shown in Figures 10 and 11 should be considered as an example only. Some of the steps may be carried out in a different order from that shown or described above or may be performed simultaneously with one another. Methods 1000 and 2000 may include providing any of the functionality of the fluid handling apparatus 100 and ablutionary device 202 described or claimed anywhere herein.

Various modifications will be apparent to the skilled person without departing form the scope of the claims. The examples described above should be understood as exemplary only. Any feature of any of the aspects or examples of the disclosure may be employed separately or in combination with any other feature of the same or different aspect or example of the disclosure and the disclosure includes any feature or combination of features disclosed herein.

## Claims

1. A fluid handling apparatus for an ablutionary device, comprising:
a hot water inlet and a cold water inlet configured to be connectable to a hot water supply and cold water supply respectively;
a mixer valve configured to receive water from the hot water inlet and the cold water inlet and output a blended stream of hot water, cold water or a mixture thereof;
a controller in communication with the mixer valve and configured to control the mixer valve according to a target output temperature set by a user;
a temperature sensor in communication with the controller and configured to generate a temperature signal indicative of the temperature of water received at the hot water inlet;
a primary outlet configured to be connectable to an outlet or outlets of the ablutionary device;
a secondary outlet for water redirection; and
one or more flow control valves in fluid communication with the mixer valve, the one or more flow control valves configured to control water flow between the mixer valve and the primary and secondary outlets,
wherein the controller is configured to control the one or more flow control valves, according to the target output temperature and the temperature signal, to operate in a first state in which the one or more flow control valves allow water to flow from the secondary outlet when water received at the hot water inlet is not at a temperature sufficient to meet the target output temperature, and to operate in a second state in which the one or more flow control valves allow water to flow from the primary outlet when water received at the hot water inlet is at a temperature sufficient to meet the target output temperature.

2. A fluid handling apparatus according to claim 1, wherein the controller is configured to operate the one or more flow control valves in the first state when the temperature of water received at the hot water inlet is less than the target output temperature.

3. A fluid handling apparatus according to claim 1 or claim 2, wherein the controller is configured to automatically switch the one or more flow control valves from the first state to the second state when the controller determines the water received at the hot water inlet is at a temperature sufficient to meet the target output temperature.

4. A fluid handling apparatus according to any preceding claim, wherein the controller is configured to operate the fluid handling apparatus in a pause mode in which water received at the hot water inlet is determined to be at a temperature sufficient to meet the target output temperature and the fluid handling apparatus is configured to pause/block fluid flow from the primary outlet.

5. A fluid handling apparatus according to claim 4, wherein one or both of:
a) the controller is configured to de-active the pause mode such that water flows to the primary outlet in response to a user input; and/or
b) the controller is configured to generate a pause message for display at a display of the ablutionary device or other user device, the pause message indicating the target output temperature can be meet and the pause mode has been activated.

6. A fluid handling apparatus according to claim 4 or claim 5, wherein:
a) the controller is configured to operate the one or more flow control valves in the first state when the fluid handling apparatus is operating in the pause mode such that water flows from the secondary outlet during operation in the pause mode; or
b) the controller is configured to operate the fluid handling apparatus to block water flow from both the primary and secondary outlets when operating in the pause mode.

7. A fluid handling apparatus according to any preceding claim, wherein the controller is configured to:
determine an amount of water which has flowed out of the secondary outlet during a period of use of the ablutionary device; and
send a determined value of the amount of water having flowed out of the secondary outlet for display at a display of the ablutionary device or at another user device.

8. An ablutionary device comprising the fluid handling apparatus of any preceding claim and having one or more outlets, the primary outlet being fluidly connected to the outlet or outlets of the ablutionary device, wherein the ablutionary device optionally comprises a shower and/or a faucet.

9. A plumbing system comprising the ablutionary apparatus of claim 8 and a device external to the ablutionary device, wherein the device external to the ablutionary device is fluidly connected to the secondary outlet.

10. A plumbing system according to claim 9, wherein the device external to the ablutionary device comprises a water storage tank, and optionally wherein:
the device external to the ablutionary device is a toilet and the water storage tank is a cistern of the toilet; or
the water storage tank is configured to supply water to the ablutionary device.

11. A method of operating a fluid handling apparatus for an ablutionary device, the method comprising:
obtaining a target output temperature set by a user;
obtaining a temperature signal indicative of the temperature of hot water received by the fluid handling apparatus;
determining, based on the target output temperature and the temperature signal, whether the hot water received by the fluid handling apparatus is at a temperature sufficient to meet the target output temperature;
operating the fluid handling apparatus in a first mode in which water is allowed to flow from a secondary outlet for water redirection when the hot water received by the fluid handling apparatus is not at a temperature sufficient to meet the target output temperature; and
operating the fluid handling apparatus in a second mode in which water is allowed to flow from a primary outlet when the hot water received by the fluid handling apparatus is at a temperature sufficient to meet the target output temperature, the primary outlet connected to the ablutionary device.

12. A method according to claim 11, further comprising operating the fluid handling apparatus in a pause mode in which the hot water received by the fluid handling apparatus is determined to be at a temperature sufficient to meet the target output temperature and fluid flow from the primary outlet is blocked/paused.

13. A method according to claim 12, further comprising:
a) receiving a user input indicating that the user is ready to begin use of the ablutionary device; and
de-activating the pause mode such that water flows to the primary outlet in response to the user input; and/or
b) generating an output message indicating the hot water received by the fluid handling apparatus is sufficient to meet the target output temperature and the pause mode has been activated; and
sending the output message for display at a display of the ablutionary device or another user device.

14. A method according to claim 12 or claim 13, wherein:
a) operating the fluid handling apparatus in the pause mode comprises directing water to the secondary outlet; or
b) operating the fluid handling apparatus in the pause mode comprises blocking water flow from both the primary and secondary outlet.

15. A method according to any of claims 11 to 14, further comprising:
determining an amount of water which has flowed out of the secondary outlet during a period of use of the ablutionary device; and
sending a determined value of the amount of water flowed out of the secondary outlet for display at a display of the ablutionary device or another user device.
